# EUROPÄISCHE PATENTSCHRIFT

(11) **EP 2 765 468 B1**
(45) Veröffentlichungstag und Bekanntmachung des Hinweises auf die Patenterteilung: **07.08.2019**
(21) Anmeldenummer: 14000430.0
(22) Anmeldetag: 05.02.2014
(51) Int. Cl.: G05D 1/02, G07C 11/00

(54) **Verfahren und Vorrichtung zur Ortsbestimmung von Transportrobotern in einem weit verzweigten Schienennetz**
Method and devices for the localisation of transport robots in a heavily branched rail network
Procédé et dispositif de détermination de la position de robots de transport dans un réseau de rails largement ramifié

(30) Priorität: 09.02.2013 DE 102013002366
(43) Veröffentlichungstag der Anmeldung: 13.08.2014
(73) Patentinhaber: Heron Innovations Factory GmbH, 6850 Dornbirn (AT)
(72) Erfinder: Christian Beer, 6858 Schwarzach (AT)
(74) Vertreter: Riebling, Peter

(56) Entgegenhaltungen:
- EP-A1- 0 482 424
- CN-A- 1 274 876
- DE-A1-102011 002 772
- DE-A1-102011 018 615

## Beschreibung

Die Erfindung betrifft ein Verfahren und eine Vorrichtung zur Ortsbestimmung von Transportrobotern in einem weitverzweigten Schienennetz nach dem Oberbegriff der Patentansprüche 1 und 6.

Die Ortsbestimmung von Transportrobotern in weitverzweigten Schienennetzen erfolgte bisher über eine Infrarot-Datenverbindung zwischen einem an einem Sensor vorbeifahrenden Transportroboter, der mit einem Infrarotgeber ausgerüstet war und einem stationär angeordneten Infrarotempfänger.

Über diese IR-Verbindung wurden Ortssignale ausgetauscht, um den an der stationären Ortsmarke vorbeifahrenden Transportroboter seine aktuelle Position mitzuteilen.

Nachteil der bekannten IR-Datenverbindung zwischen einer stationären Wegemarkierung und einem daran vorbeifahrenden Transportroboter ist jedoch, dass die IR-Verbindung vom Tageslicht gestört werden kann, und dass sie eine relativ langsame Reaktionsgeschwindigkeit besitzt, was bedeutet, dass bei schnell vorbeifahrenden Transportrobotern eine sichere Übertragung nicht mehr gewährleistet ist.

Die DE 10 2011 018 615 A1 zeigt eine Vorrichtung zur Ortsbestimmung von auf einer Unterlage verfahrbaren Fahrzeugen, mit einer Funkverbindung zwischen der Unterlage und dem auf der Unterlage fahrenden Fahrzeug, wobei an bestimmten stationären Ortsmarkierungen auf der Unterlage eine Anzahl von RFID-Tags in Kombination mit Permanentmagneten angeordnet sind und jedem Fahrzeug mindestens ein RFID-Reader und mindestens ein Magnetsensor zugeordnet ist, der in der Lage ist, die Kennung der RFID-Tags und der Permanentmagnete auszulesen und als Ortsbestimmung zu verarbeiten. Nachteilig an dieser Vorrichtung ist der hohe Steuerungsaufwand des Fahrzeuges, da der momentane Richtungswert mit dem Soll-Richtungswert verglichen werden muss um bei Abweichungen von der Fahrtrichtung gegenzulenken, um eine mögliche Abweichung zu korrigieren.

Die EP 0 482 424 A1 zeigt ein Fahrzeugsteuersystem zur Steuerung von auf einem Schienensystem verfahrbaren Fahrzeugen. Das Schienensystem weist entlang der Laufbahn der Fahrzeuge eine Anzahl von Zonen auf, die mit einer Kommunikationsvorrichtung gekoppelt sind. Wenn sich ein vorausfahrendes Fahrzeug in einer Zone befindet, wird ein Signal an das folgende Fahrzeug gesendet, um eine Einfahren dieses Fahrzeuges in die Zone zu verhindern. Mit dieser Vorrichtung ist es nicht möglich komplexe logistische Fahrmanöver zu tätigen, das nur ein Belegungssignal an das Fahrzeug gesendet wird und das Fahrzeug nicht autark in dem Schienensystem navigieren kann.

Der Erfindung liegt deshalb die Aufgabe zugrunde, ein Verfahren und eine Vorrichtung zur Ortsbestimmung von Transportrobotern in einem weitverzweigten Schienennetz so weiterzubilden, dass eine besonders schnelle und störunanfällige Ortsbestimmung des Transportroboters im Schienennetz erfolgen kann.

Zur Lösung der gestellten Aufgabe ist die Erfindung durch eine Vorrichtung mit den Merkmalen nach Patentanspruch 1 sowie ein Verfahren mit den Merkmalen nach Patentanspruch 6 gekennzeichnet.

Wesentliches Merkmal der Erfindung ist, dass an bestimmten stationären Ortsmarkierungen im Schienennetz eine Anzahl von RFID-Tags angeordnet sind und jedem Transportroboter mindestens ein RFID-Reader zugeordnet ist, der in der Lage ist, die Kennungen der passiv oder aktiv eingestellten RFID-Tags auszulesen und zu verarbeiten.

Mit der gegebenen technischen Lehre ergibt sich der wesentliche Vorteil, dass nun erstmals passiv oder aktiv arbeitende RFID-Tags als Ortswegemarken eingesetzt werden, und zwar an bestimmten ausgewählten Punkten im Schienennetz, und dass auf den im Schiennetz verfahrenden Transportrobotern jeweils mindestens ein Reader angeordnet ist, der in der Lage ist, von jedem einzelnen RFID-Tag seine Kennung auszulesen und zu verarbeiten.

Damit wird erstmals die Möglichkeit geschaffen, dem auf dem Schiennetz verkehrenden Transportroboter in sehr genauer Form seine aktuelle Ortskoordinate mitzuteilen. Diese Funkübermittlung über den RFID-Standard ist störunanfällig, weil eine Nahfeldkommunikation angestrebt wird, sodass die entsprechenden Signale nur über einen Weg von etwa 20 cm übertragen werden und keine weitere Signalausbreitung über diese kurze Reichweite hinaus notwendig und gewünscht ist.

Es wird in dem Standardfunkbereich von 13,56 Megahertz gearbeitet, was dafür sorgt, dass ein Übersprechen oder eine Fremdeinwirkung durch andere Funkkanäle ausgeschlossen ist. Insbesondere werden Einwirkungen von W-LAN-Kanälen damit ausgeschlossen, weil es sich um eine sehr kurze störunanfällige Datenverbindung handelt.

Diese Datenverbindung ermöglicht aufgrund der relativ hohen Funkfrequenz, den Transportrobotern, welche mit hoher Geschwindigkeit auf dem Schiennetz verfahren, beim Vorbeifahren die Kennung des RFID-Tags auszulesen und zu verarbeiten.

Mit einer hohen Geschwindigkeit ist eine Geschwindigkeit von mindestens 5 Meter pro Sekunde gemeint, mit der die Transportroboter an einem solchen ortsfesten RFID-Tag vorbeifahren.

Weiterer Vorteil ist, dass wegen der Verwendung von passiven RFID-Tags auf eine Stromversorgung dieser Tags verzichtet werden kann, sodass diese eine nahezu unbegrenzte Lebensdauer haben und in beliebiger Weise über einen langen Zeitraum eingesetzt werden können.

In einer Weiterbildung der vorliegenden Erfindung, welche in Kombination mit dem Merkmal des Anspruches 1 Schutz genießen sollen, ist vorgesehen, dass zur weiteren Verbesserung der Positionsgenauigkeit eines an einem RFID-Tag vorbeifahrenden Transportroboters noch zusätzlich eine magnetfeldgebundene Signalerkennung vorgesehen ist.

Hier ist in einer bevorzugten Ausgestaltung vorgesehen, dass im RFID-Tag selbst oder in einem vorgegebenen Abstand zum RFID-Tag ein Permanentmagnet angeordnet ist und mit diesem verbunden ist.

Der Permanentmagnet baut ein permanentmagnetisches Feld in Richtung auf den vorbeifahrenden Transportroboter, der nächst diesem stationär angeordneten Permanentmagneten einen geeigneten Magnetsensor aufweist, auf. Der Magnetsensor ist zum Beispiel als Hall-Sensor, als Reed-Schalter oder dergleichen ausgebildet und reagiert sofort bei Vorbeifahrt.

Dies hat den Vorteil, dass wegen einer induktiven oder permanentmagnetischen Verbindung zwischen dem Transportroboter und dem RFID-Tag im Schiennetz eine sehr genaue Lokalisierung möglich ist.

Während bei den herkömmlich verwendeten RFID-Tags eine Ungenauigkeit von etwa 20 cm in Kauf genommen werden muss, wird die Positionsgenauigkeit bei der Ermittlung des Ortes des Transportroboters in Bezug zu dem mit dem Permanentmagneten verknüpften RFID-Tag, auf 1 mm verbessert.

Das heißt, es handelt sich um eine etwa hundertfach verbesserte Positionsgenauigkeit, weil ein Ansprechen des Magnetsensors im Transportroboter nur dann erfolgt, wenn dieser sich in einem Bereich von etwa 1 bis 2 mm gegenüber dem Permanentmagneten im RFID-Tag befindet.

Damit ist nun eine absolut genaue Positionsbestimmung eines Transportroboters im Schiennetz möglich, was bisher nicht der Fall war.

Erfindungsgemäß sind also zwei Signalgeber vorhanden, einmal der RFID-Tag, der auf einen Funkbefehl eine Kennung an den Reader im Transportroboter abgibt, und zum Zweiten der Permanentmagnet, der im oder am RFID-Tag angeordnet ist. Wenn eines der beiden Signalgeber fehlt (RFID-Tag oder Permanentmagnet), wird dies als Störung erkannt und der Transportroboter wird sofort gestoppt. Dies ist eine Sicherheitsmaßnahme, um zu verhindern, dass der Transportroboter an einer bestimmten kritischen Stelle seine Ortskoordinate nicht genau genug empfangen kann.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
Figur 1:
   schematisiert in Draufsicht ein weit verzweigtes Schiennetz mit zwei beispielhaft angeordneten Transportrobotern
Figur 2:
   die Draufsicht auf einen RFID-Tag mit dort angeordnetem Permanentmagneten
Figur 3:
   die Seitenansicht der Signalverbindung zwischen einem Transportroboter und der Fahrstrecke im Bereich einer Fahrschiene
Figur 4:
   die Annäherung des Transportroboters an den ortsfesten RFID-Tag
Figur 5:
   das Überfahren des Transportroboters bezüglich des stationär angeordneten RFID-Tags

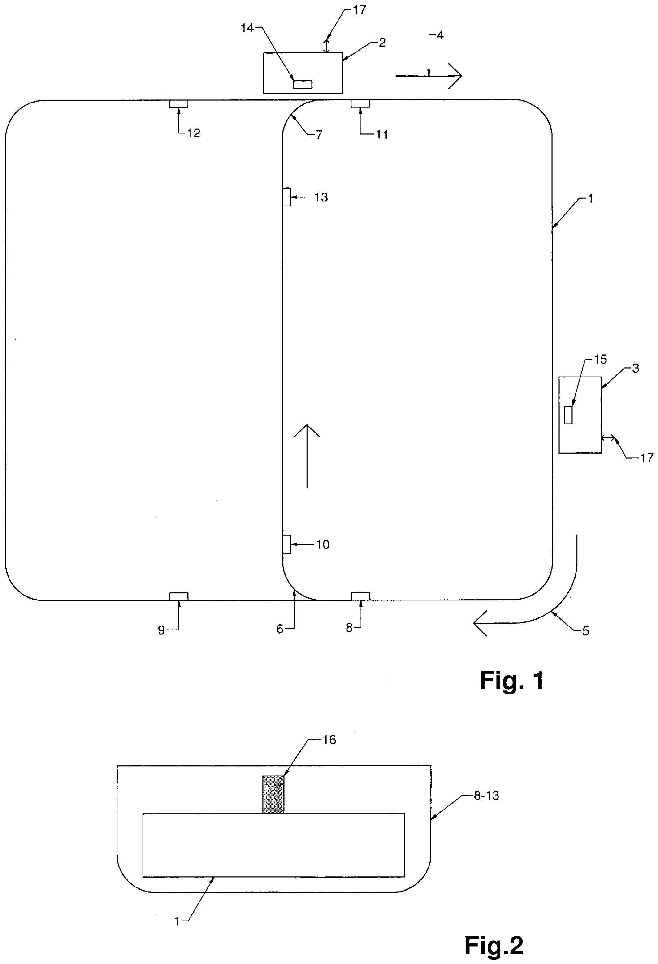

In Figur 1 ist ein weitverzweigtes Schiennetz 1 lediglich beispielhaft dargestellt. Es besteht insgesamt aus kilometerlang verlegten Fahrschienen 22, die in beliebiger Weise in einer sehr großen Fläche von mehreren Hundert Quadratmetern angeordnet sein können.

Als Beispiel ist dargestellt, dass zwei Transportroboter 2, 3 in den Pfeilrichtungen 4, 5 auf dem Schiennetz 1 autonom verfahren und jeder Transportroboter 2, 3 mit einem Reader 14, 15 ausgerüstet ist, der mit einer Sende- und Empfangsantenne (17) mit den an speziellen Orten am Schiennetz stationär befestigten RFID-Tags 8-13 zusammenwirkt.

Beispielsweise zeigt die Figur 1, dass im Bereich einer Weiche 6, 7 jeweils drei RFID-Tags 8, 9, 10 angeordnet sind, nämlich am Einlaufbereich der Weiche, am Auslaufbereich der Weiche und an der von der Weiche verzweigenden Fahrstrecke. Demgemäß sind dort die RFID-Tags 8, 9, 10 angeordnet. Gleiches gilt für die RFID-Tags 11, 12, 13 bezüglich der Weiche 7.

Zur Verbesserung der Positionserkennung an einem RFID-Tag 8-13 sieht die Erfindung nach einem speziellen Merkmal gemäß Figur 2 vor, dass jedes RFID-Tag 8-13 noch zusätzlich mit einem als Magnetstein ausgebildeten Permanentmagneten 16 ausgerüstet ist. Die Erfindung ist nicht darauf beschränkt, dass ein Permanentmagnet 16 direkt im Gehäuse des RFID-Tags 8-13 eingebaut ist. Er kann auch daneben oder in einem bestimmten definierten Abstand angeordnet sein. Wichtig ist nur, dass jeder RFID-Tag zusätzlich mit einem Permanentmagnet 16 kombiniert ist, wodurch die Positionsgenauigkeit wesentlich verbessert wird.

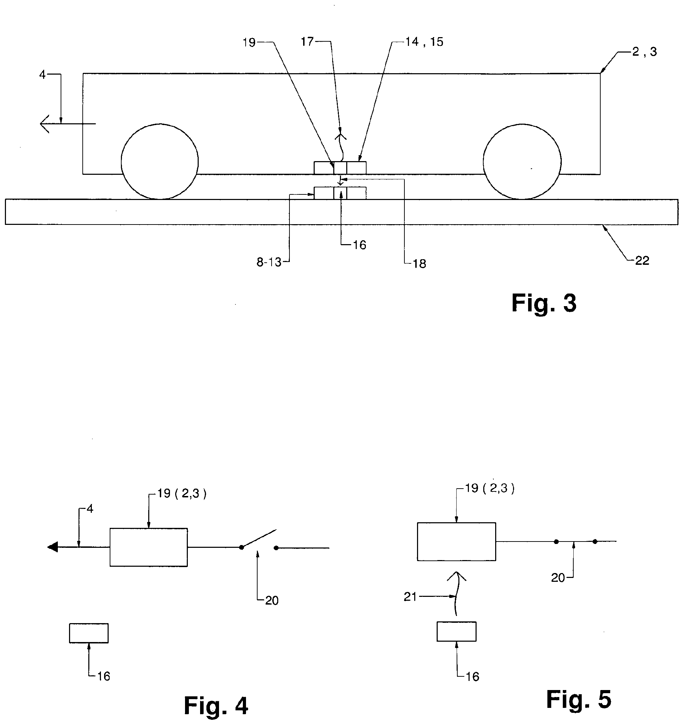

Die Figur 3 zeigt in der Seitenansicht, dass ein Transportroboter 2, 3 in Pfeilrichtung 4 mit seinen Rädern in einer Fahrschiene 22 in Pfeilrichtung 4 verfährt und hierbei an seiner Seitenfläche oder an seiner Unterseite einen Reader 14, 15 aufweist, der mit einem Magnetsensor 19 verbunden ist.

Der Magnetsensor 19 muss nicht zwangsläufig im Reader 14, 15 befestigt sein. Er kann auch an einer anderen Stelle des Transportroboters 2, 3 befestigt sein.

Demgegenüber und stationär ist auf der Fahrschiene oder an einem sonstigen Punkt des Schiennetzes 1 ein RFID-Tag 8-13 angeordnet, in dem ein Permanentmagnet 16 integriert ist.

Neben der durch den Reader 14, 15, über die Antenne 1 zum RFID-Tag entstehenden Funkverbindung 18 7 ist noch eine magnetische Verbindung vorhanden. Dies zeigt die Figur 4, wobei beispielhaft gezeigt ist, dass der Permanentmagnet 16 - solange der Transportroboter 2 noch nicht sich über dem Permanentmagnet 16 befindet - einen Signalschalter 20 (elektronisch oder mechanischer Schalter) geöffnet hält, der nicht betätigt ist.

Sobald aber der Permanentmagnet 16 in Gegenüberstellung zu dem Magnetsensor 19 im Transportroboter 2, 3 gelangt, wird ein entsprechendes Signal ausgelöst, und der Signalschalter 20 wird geschlossen. Die Verbindung erfolgt also durch eine magnetische Feldstärke 21, die von dem stationären Permanentmagnet 16 auf den vorbeifahrenden Magnetsensor 19 ausgeübt wird. Damit kann die Positionsgenauigkeit von einem Bereich von etwa 10 bis 20 cm auf 1 mm verbessert werden.

Die Erfindung ist nicht darauf beschränkt, dass der Magnetsensor 19 im Transportroboter 2, 3 angeordnet und der Permanentmagnet 16 stationär ist. Es könnte auch umgekehrt der Fall sein, dass der Magnetsensor 19 im RFID-Tag 8-13 angeordnet ist und der Permanentmagnet im Transportroboter 2, 3.

### Zeichnungslegende

1. Schiennetz
2. Transportroboter
3. Transportroboter
4. Pfeilrichtung
5. Pfeilrichtung
6. Weiche
7. Weiche
8. RFID-Tag (passiv oder aktiv)
9. RFID-Tag
10. RFID-Tag
11. RFID-Tag
12. RFfD-Tag
13. RFID-Tag
14. Reader
15. Reader
16. Permanentmagnet
17. Antenne
18. Funkverbindung
19. Magnetsensor
20. Signalschalter
21. magnetische Feldstärke
22. Fahrschiene

## Patentansprüche

1. Vorrichtung zur Ortsbestimmung von auf einer Unterlage verfahrbaren Fahrzeugen mit einer Funkverbindung (18) zwischen der Unterlage und dem auf der Unterlage fahrenden Fahrzeug wobei an bestimmten stationären Ortsmarkierungen auf der Unterlage eine Anzahl von RFID-Tags (8 bis 13) in Kombination mit Permanentmagneten (16) angeordnet sind und jedem Fahrzeug mindestens ein RFID-Reader (14, 15) und mindestens ein Magnetsensor (19) zugeordnet ist, die in der Lage sind, die Kennungen der RFID-Tags (8 bis 13) und der Permanentmagnete auszulesen und als Ortsbestimmung zu verarbeiten, **dadurch gekennzeichnet, dass** das Fahrzeug ein autonom und autark fahrender Transportroboter (2, 3) ist, der in einem als Unterlage dienenden verzweigten Schienennetz (1) verfahrbar ist und dass die RFID-Tags passiv ausgebildet sind und zur Verbesserung der Positionsgenauigkeit mit jeweils einem als Magnetstein ausgebildeten Permanentmagneten (16) verknüpft sind, der im RFID-Tag selbst oder in einem vorgegebenen Abstand zum RFID-Tag angeordnet ist.

2. Vorrichtung nach Anspruch 1, **dadurch gekennzeichnet, dass** der Transportroboter (2, 3) mindestens einen Reader (14, 15) mit magnetfeldgebundener Signalerkennung hat.

3. Vorrichtung Anspruch 1 oder 2, **dadurch gekennzeichnet, dass** die Magnetkomponente des Readers (14, 15, 19) als Hall-Sensor oder als Reed-Schalter ausgebildet ist.

4. Vorrichtung nach einem der Ansprüche 1 bis 3, **dadurch gekennzeichnet, dass** der Permanentmagnet (16) im RFID-Tag (8 bis 13) oder in einem definierten Abstand davon angeordnet ist.

5. Vorrichtung nach einem der Ansprüche 1 bis 4, **dadurch gekennzeichnet, dass** der Permanentmagnet (16) eine magnetische oder induktive Verbindung (18, 21) in Richtung auf den vorbeifahrenden Transportroboter (2, 3) aufbaut.

6. Verfahren zur Ortsbestimmung von Transportrobotern (2, 3) in einem Schienennetz (1) mit einer Funkverbindung (18) zwischen dem Schiennetz (1) und einem auf dem Schienennetz fahrenden Transportroboter (2, 3) wobei an bestimmten Ortsmarkierungen im Schienennetz (1) eine Anzahl von RFID-Tags (8 bis 13) in Kombination mit Permanentmagneten (16) angeordnet sind, wobei in einem ersten Verfahrensschritt ein Transportroboter (2, 3) mit mindestens einem RFID-Reader (14, 15) eine bestimmte, stationäre Ortsmarkierungen von RFID-Tags (8 bis 13) und Permanentmagneten (16) im Schiennetz (1) erfasst, und in einem zweiten Verfahrensschritt die Kennungen der RFID-Tags (8 bis 13) und der Permanentmagnete (16) ausliest und als Ortsbestimmung verarbeitet, **dadurch gekennzeichnet, dass** durch eine induktive oder permanentmagnetische Signalerkennung eine genaue Lokalisierung und Bestimmung der Ortskoordinate des Transportroboters (2, 3) möglich ist, und dass ein Ansprechen des Magnetsensors im Transportroboter (2, 3) nur dann erfolgt, wenn sich in einem Bereich von etwa 1 bis 2 mm gegenüber dem Permanentmagneten (16) ein RFID-Tag (8 bis 13) befindet.

7. Verfahren nach Anspruch 6, **dadurch gekennzeichnet, dass** beim Überfahren des Permanentmagneten (16) eine Manipulation des Schienennetzes (1), ein Verstellen einer Weiche (6, 7) oder ein Schalten eines Signalschalters (20) ausgelöst wird.

8. Verfahren nach einem der Ansprüche 6 bis 7, **dadurch gekennzeichnet, dass** der Transportroboter (2, 3) selbständig stoppt, wenn ein oder beide Signalgeber, RFID-Tag (8, 13) oder Permanentmagnet(16) fehlt oder fehlen.

9. Verfahren nach einem der Ansprüche 6 bis 8, **dadurch gekennzeichnet, dass** der Signalschalter (20) bei Gegenüberstellung des Permanentmagneten (16) zu dem im Transportroboter (2, 3) befindlichen Magnetsensor (19) geschlossen wird.

## Claims

1. Device for location determination of vehicles which are movable on a foundation with a radio link (18) between the foundation and the vehicle moving on the foundation, wherein a number of RFID tags (8 to 13) in combination with permanent magnets (16) are arranged at certain stationary location markings on the foundation and at least one RFID reader (14, 15) and at least one magnetic sensor (19), which are able to read out the recognition signals of the RFID tags (8 to 13) and the permanent magnets and to process them as a location determination, is assigned to each vehicle, **characterised in that** the vehicle is an autonomously and self-sufficiently moving transport robot (2, 3) which is movable in a branched rail network (1) serving as the foundation and **in that** the RFID tags are designed to be passive and to improve the position accuracy, are linked to respectively one permanent magnet (16) formed as magnetite and which is arranged in the RFID tag itself or at a preset distance from the RFID tag.

2. Device according to claim 1, **characterised in that** the transport robot (2, 3) has at least one reader (14, 15) with magnetic field-sensitive signal recognition.

3. Device according to claim 1 or 2, **characterised in that** the magnetic component of the reader (14, 15, 19) is designed as a Hall sensor or as a Reed switch.

4. Device according to one of claims 1 to 3, **characterised in that** the permanent magnet (16) is arranged in the RFID tag (8 to 13) or at a defined distance therefrom.

5. Device according to one of claims 1 to 4, **characterised in that** the permanent magnet (16) sets up a magnetic or inductive link (18, 21) in the direction of the passing transport robot (2, 3).

6. Method for location determination of transport robots (2, 3) in a rail network (1) with a radio link (18) between the rail network (1) and a transport robot (2, 3) moving on the rail network, wherein a number of RFID tags (8 to 13) in combination with permanent magnets (16) are arranged at certain location markings in the rail network (1), wherein in a first method step, a transport robot (2, 3) with at least one RFID reader (14, 15) records a certain stationary location marking of RFID tags (8 to 13) and permanent magnets (16) in the rail network (1), and in a second method step, reads out the recognition signals of the RFID tags (8 to 13) and the permanent magnets (16) and processes them as a location determination, **characterised in that** due to inductive or permanent-magnet signal recognition, precise location and determination of the location coordinates of the transport robot (2, 3) is possible, and **in that** responding of the magnetic sensor in the transport robot (2, 3) only takes place if an RFID tag (8 to 13) is situated in a range of about 1 to 2 mm with respect to the permanent magnet (16).

7. Method according to claim 6, **characterised in that** when moving over the permanent magnet (16), manipulation of the rail network (1), adjustment of points (6, 7) or switching of a signalling switch (20) is triggered.

8. Method according to one of claims 6 to 7, **characterised in that** the transport robot (2, 3) stops independently if one or both signalling transmitters, RFID tag (8, 13) or permanent magnet (16) is or are missing.

9. Method according to one of claims 6 to 8, **characterised in that** the signalling switch (20) is closed if the permanent magnet (16) and the magnetic sensor (19) situated in the transport robot (2, 3) are opposite one another.

## Revendications

1. Dispositif de localisation de véhicules aptes à circuler sur un support, avec une liaison radio (18) entre le support et le véhicule circulant sur le support, dans lequel il est prévu sur des marquages de position stationnaires définis, sur le support, un certain nombre d'étiquettes RFID (8 à 13) en combinaison avec des aimants permanents (16), et à chaque véhicule sont associés au moins un lecteur RFID (14, 15) et au moins un capteur magnétique (19) qui sont en mesure de lire les identifications des étiquettes RFID (8 à 13) et des aimants permanents et de les traiter comme localisation, **caractérisé en ce que** le véhicule est un robot de transport (2, 3) circulant de manière autonome et en autarcie qui est apte à circuler dans un réseau de rails (1) à embranchement servant de support, et **en ce que** les étiquettes RFID sont passives et, pour améliorer la précision de position, sont connectées chacune à un aimant permanent (16) conçu comme un aimant naturel qui est disposé dans l'étiquette RFID elle-même ou à une distance prédéfinie de l'étiquette RFID.

2. Dispositif selon la revendication 1, **caractérisé en ce que** le robot de transport (2, 3) a au moins un lecteur (14, 15) avec une identification de signal liée à un champ magnétique.

3. Dispositif selon la revendication 1 ou 2, **caractérisé en ce que** le composant magnétique du lecteur (14, 15, 19) est conçu comme un capteur à effet Hall ou comme un commutateur reed.

4. Dispositif selon l'une des revendications 1 à 3, **caractérisé en ce que** l'aimant permanent (16) est disposé dans l'étiquette RFID (8 à 13) ou à une distance définie de celle-ci.

5. Dispositif selon l'une des revendications 1 à 4, **caractérisé en ce que** l'aimant permanent (16) forme une liaison magnétique ou inductive (18, 21) en direction du robot de transport (2, 3) qui passe devant lui.

6. Procédé de localisation de robots de transport (2, 3) dans un réseau de rails (1) avec une liaison radio (18) entre le réseau de rails (1) et un robot de transport (2, 3) circulant sur le réseau de rails, dans lequel il est prévu sur des marquages de position définis, dans le réseau de rails (1), un certain nombre d'étiquettes RFID (8 à 13) en combinaison avec des aimants permanents (16), dans lequel un robot de transport (2, 3) avec au mois un lecteur RFID (14, 15) détecte, lors d'une première étape de procédé, un marquage de position stationnaire défini d'étiquettes RFID (8 à 13) et d'aimants permanents (16) dans le réseau de rails (1) et, lors d'une deuxième étape de procédé, lit les identifications des étiquettes RFID (8 à 13) et des aimants permanents (16) et les traite comme position, **caractérisé en ce que** grâce à une détection de signaux inductive ou par aimants permanents, une localisation et une définition précises des coordonnées de position du robot de transport (2, 3) sont possibles, et **en ce qu'**une réaction du capteur magnétique dans le robot de transport (2, 3) n'est possible que si une étiquette RFID (8 à 13) se trouve dans une zone d'environ 1 à 2 mm par rapport à l'aimant permanent (16).

7. Procédé selon la revendication 6, **caractérisé en ce que** lors du franchissement des aimants permanents (16), une manipulation du réseau de rails (1), un réglage d'un aiguillage (6, 7) ou une commutation d'un commutateur de signal (20) est déclenché.

8. Procédé selon l'une des revendications 6 à 7, **caractérisé en ce que** le robot de transport (2, 3) s'arrête tout seul s'il manque l'un des deux ou les deux émetteurs de signaux constitués par l'étiquette RFID (8, 13) ou l'aimant permanent (16).

9. Procédé selon l'une des revendications 6 à 8, **caractérisé en ce que** le commutateur de signal (20) se ferme quand l'aimant permanent (16) est en face du capteur magnétique (19) qui se trouve dans le robot de transport (2, 3).
